# EUROPÄISCHE PATENTANMELDUNG

(11) **EP 2 733 307 A1**
(43) Veröffentlichungstag der Anmeldung: **21.05.2014**
(21) Anmeldenummer: 12192936.8
(22) Anmeldetag: 16.11.2012
(51) Int. Cl.: F01D 5/00, B23P 19/02, F01D 25/28

(54) **Fräseinheit für Austreibevorrichtung**

(71) Anmelder: Siemens Aktiengesellschaft, 80333 München (DE)
(72) Erfinder: Neukrantz, Oliver, 10247 Berlin (DE); Richter, Matthias, 12247 Berlin (DE)

(57) **Zusammenfassung**

Die vorliegende Erfindung betrifft ein Verfahren und eine Vorrichtung zum Austreiben von formschlüssig an einer Radscheibe gehaltenen Schaufeln, insbesondere Verdichterschaufeln. Die Austreibevorrichtung (1) umfasst ein Basisgestell (2), einen an dem Basisgestell (2) befestigten Rahmen (6, 8, 9, 10), einen an dem Basisgestell (2) angeordneten Drehtisch (11), insbesondere Hub-Drehtisch, eine an dem Rahmen befestigte Schlageinheit (12) mit einem Austreibestempel (25) und einem auf diesen wirkenden Schlagwerk (23), eine schwenkbar an dem Rahmen (6, 8, 9, 10) vorgesehene Klemmeinheit (13), die zur Abstützung der Radscheibe während des Austreibens einer Schaufel ausgebildet ist, und eine separat und beabstandet von dem Rahmen (6, 8, 9, 10) angeordnete Fräseinheit (14) .

## Beschreibung

Die Erfindung betrifft eine Vorrichtung und ein Verfahren zum Austreiben von formschlüssig an einer Radscheibe gehaltenen Schaufeln, insbesondere Verdichterschaufeln.

Bei Gas- bzw. Dampfturbinen sind die an einer Verdichterradscheibe angeordneten Verdichterschaufeln einem Verschleiß unterworfen, weshalb sie nach bestimmten Laufzeitintervallen im Rahmen einer Revision ausgetauscht werden müssen. Hierzu werden die Verdichterradscheiben zunächst aus der Turbine ausgebaut, woraufhin die Verdichterschaufeln meist vor Ort entfernt und durch neue Verdichterschaufeln ersetzt werden.

Die Verdichterschaufeln sind über einen schwalbenschwanzartig ausgebildeten Schaufelfuß in entsprechend geformten und an der Verdichterradscheibe ausgebildeten Nuten formschlüssig gehalten. Die Sicherung einer Verdichterschaufel gegen ein axiales Verschieben in der entsprechenden Nut wird entweder über Sicherungsbleche oder über das Anprägen zweier am Schaufelfuß ausgebildeter Sicherungsnasen an den Enden der jeweiligen Nut realisiert.

Das Lösen der Verdichterschaufeln von der Verdichterradscheibe im Rahmen der Revision einer Gas- bzw. Dampfturbine erfolgt bislang durch manuelles Austreiben. Hierzu werden die ausgebauten Verdichterradscheiben zunächst waagerecht mit der Nabe auf eine Unterlage gelegt. Anschließend treiben je zwei Werker mithilfe eines Kupferbolzens und entsprechenden Hammerschlägen die Schaufeln nacheinander aus. Ein Werker umfasst hierbei den meist mit Putzlappen umwickelten Kupferbolzen und setzt diesen auf den Schaufelfuß auf. Der zweite Werker schlägt mit einem 5 bzw. 10 kg schweren Vorschlaghammer auf den Kupferbolzen. Es sind je nach Schaufelfußgröße und Schaufelhöhe sowie Übermaß in der Passung und Laufzeit der Turbine zwischen 20 und 50 Schläge für das Austreiben einer Schaufel erforderlich. Die körperliche Belastung der Werker und die Verletzungsgefahr sind hoch. Auch kann die Verdichterradscheibe beim manuellen Austreiben leicht beschädigt werden.

Falls sich mit dieser Methode die Schaufeln nicht austreiben lassen, so werden die Schaufeln hinter dem Schaufelfuß abgesägt. Anschließend muss in jeden Schaufelfuß der Verdichterradscheibe von außen mit einem Scheibenfräser eine Entlastungsnut gefräst werden, um die Schaufeln im Anschluss austreiben zu können. Da geeignete Fräsmaschinen in der Regel weder im Kraftwerk noch in der näheren Umgebung vorhanden sind, fallen oft lange Transportwege für den Hin- und Rücktransport der Verdichterradscheiben an. Dadurch wird die Dauer der Revision verlängert, was mit entsprechenden Kosten verbunden ist. Darüber hinaus wird die erneute Inbetriebnahme der Gas- bzw. Dampfturbine verzögert.

Nach dem Austreiben der Verdichterschaufeln müssen diese durch neue Verdichterschaufeln ersetzt werden. Auch diese müssen in den zugeordneten Nuten gegen axiales Verschieben gesichert werden, was durch das Anprägen von je einer Sicherungsnase auf der Unter- und Oberseite des Schaufelfußes erfolgt. Hierzu wird derzeit eine separate Sondermaschine in Form einer mobilen Prägevorrichtung eingesetzt, die zur jeweiligen Baustelle geflogen werden muss.

Ausgehend von diesem Stand der Technik ist es eine Aufgabe der vorliegenden Erfindung, eine alternative Austreibevorrichtung zum Austreiben von formschlüssig an einer Radscheibe gehaltenen Schaufeln sowie ein entsprechendes alternatives Austreibeverfahren zu schaffen, bei dem insbesondere die körperliche Belastung für die Werker ebenso wie das Unfallrisiko verringert wird, Zeit- und Kostenaufwand für das Austreiben und Stillstandszeiten der Gas- bzw. Dampfturbine gering sind, die Anzahl der für die Durchführung einer Revision erforderlichen Maschinen gering ist und der Transport der erforderlichen Maschinen zum Austreiben und Erneuern der Schaufeln vor Ort problemlos durchgeführt werden kann.

Zur Lösung dieser Aufgabe schafft die vorliegende Erfindung eine Austreibevorrichtung zum Austreiben von formschlüssig an einer Radscheibe gehaltenen Schaufeln, insbesondere Verdichterschaufeln, umfassend ein Basisgestell, einen an dem Basisgestell befestigten Rahmen, einen an dem Basisgestell angeordneten Drehtisch, insbesondere Hub-Drehtisch, eine an dem Rahmen befestigte Schlageinheit mit einem Austreibestempel und einem auf diesen wirkenden Schlagwerk, eine schwenkbar an dem Rahmen vorgesehene Klemmeinheit, die zur Abstützung der Radscheibe während des Austreibens einer Schaufel ausgebildet ist, und eine separat und beabstandet von dem Rahmen angeordnete Fräseinheit. Die Radscheibe, an der die auszutreibenden Schaufeln gehalten sind, kann entsprechend an dem Drehtisch montiert werden. Mit der Fräseinheit können dann Prägebereiche, mit denen die auszutreibenden Schaufeln an der Radscheibe festgelegt sind, vor dem Austreibeprozess zumindest zum Großteil entfernt werden. Darüber hinaus können mit der Fräseinheit vor der Durchführung des Austreibeprozesses in die Schaufelfüße der auszutreibenden Schaufeln Nuten eingebracht werden, die zur Aufnahme und Abstützung des Austreibestempels dienen. Dabei entspricht die Form der Nut bevorzugt im Wesentlichen der Form des Austreibestempels. Mit derartigen Nuten kann ein versehentliches Abrutschen des Austreibestempels von der auszutreibenden Schaufel verhindert werden. Während des sich anschließenden Austreibeprozesses können die einzelnen Schaufeln dann mit dem Austreibestempel der Schlageinheit und dem auf diesem wirkenden Schlagwerk der Reihe nach halbautomatisch oder vollautomatisch ausgetrieben werden. Die Klemmeinheit dient während des Austreibens der Schaufeln in erster Linie dazu, die hierbei entstehenden Reaktionskräfte zu neutralisieren, um ein Verrutschen der Verdichterradscheibe während des Austreibens zu verhindern. Dank der erfindungsgemäßen Austreibevorrichtung wird der Körper des die Austreibung der Schaufeln vornehmenden Werkers kaum oder gar nicht belastet. Auch ist das Unfallrisiko im Vergleich zum manuellen Austreiben wesentlich geringer. Darüber hinaus wird eine sehr hohe Prozessqualität erzielt, wobei die Gefahr einer Beschädigung der Verdichterradscheibe minimal ist. Ferner ist es unwahrscheinlich, dass ein Absägen der Schaufeln hinter dem Schaufelfuß oder ein Ausfräsen des Schaufelfußes erforderlich ist. Ferner ist der Zeit- und Kostenaufwand für das Austreiben von Schaufeln unter Verwendung der erfindungsgemäßen Austreibevorrichtung sehr gering, was auch mit geringen Stillstandszeiten und Ausfallkosten der Turbine im Rahmen einer Revision einhergeht.

Gemäß einer Ausgestaltung der vorliegenden Erfindung weist die Schlageinheit einen auf den Austreibestempel wirkenden Vorspannzylinder auf, mit dem der Austreibestempel mit einem vorbestimmten Druck gegen eine auszutreibende Schaufel vorspannbar ist. Mit Hilfe eines solchen Vorspannzylinders kann ein Großteil der zum Austreiben erforderlichen Kraft erzeugt werden, die über den Austreibestempel auf die Schaufel ausgeübt wird. So kann beispielsweise die Vorspannkraft derart gewählt werden, dass sie im Bereich zwischen 70% und 90% der erforderlichen Austreibekraft liegt, während der restliche geringere Anteil der Austreibekraft über das Schlagwerk erzeugt wird, was eine sehr präzise Steuerung des Austreibeverfahrens ermöglicht.

Bevorzugt ist zumindest eine Bedieneinrichtung vorgesehen, über die der Vorspanndruck des Vorspannzylinders und/oder die Schlagenergie des Schlagwerks und/oder die Schlagfrequenz des Schlagwerks von einem Bediener einstellbar ist/sind, wobei der Vorspanndruck insbesondere in einem Bereich zwischen 0 und 250 bar einstellbar ist. Entsprechend kann der Werker die jeweiligen Parameter während des Austreibevorgangs bedarfsgerecht einstellen bzw. anpassen.

Gemäß einer Ausgestaltung der vorliegenden Erfindung sind eine Maschinensteuerung und zumindest ein den Vorspanndruck des Vorspannzylinders erfassender Sensor vorgesehen, der den erfassten Vorspanndruck in Form von Vorspanndruckausgangssignalen an die Maschinensteuerung sendet, wobei die Maschinensteuerung derart eingerichtet ist, dass sie den Vorspanndruck des Vorspannzylinders und/oder die Schlagkraft des Schlagwerks und/oder die Schlagenergie des Schlagwerks in Abhängigkeit von den empfangenen Vorspanndruckausgangssignalen ändert. Mit anderen Worten wird über die Maschinensteuerung und den zumindest einen Sensor eine automatische Steuerung bzw. Regelung des Austreibeprozesses realisiert. Alternativ ist eine manuelle Einstellung der Drücke und Schlagfrequenz durch den Bediener auf der Basis von Erfahrungswerten und/oder dem aktuellen Bearbeitungszustand möglich.

Der Vorspannzylinder ist bevorzugt ein Hydraulikzylinder. Ein solcher Hydraulikzylinder hat sich als besonders günstig erwiesen.

Der Vorspannzylinder weist gemäß einer Ausgestaltung der vorliegenden Erfindung eine durchgehende Kolbenstange auf und ist derart zwischen dem Schlagwerk und dem Austreibestempel angeordnet, dass das Schlagwerk auf das eine Kolbenstangenende wirkt, und dass das andere Kolbenstangenende auf den Austreibestempel wirkt. Auf diese Weise wird ein besonders einfacher und kostengünstiger Aufbau erzielt.

Das Schlagwerk weist bevorzugt einen pneumatischen Schlagzylinder auf.

Gemäß einer Ausgestaltung der vorliegenden Erfindung ist der Austreibestempel in einem Aufnahmekopf pendelnd gelagert, so dass der Austreibestempel insbesondere in beiden Richtungen quer zu seiner Längsachse auslenkbar ist. Auf diese Weise wird verhindert, dass der Austreibestempel beschädigt wird, wenn Seitenkräfte auf diesen wirken. Der Auslenkwinkel kann mit einer geeigneten Sensorik während des Austreibeprozesses überwacht werden. So kann beispielsweise ein entsprechender Sensor pro Auslenkrichtung im Aufnahmekopf angeordnet sein.

Das freie Ende des Austreibestempels ist im Querschnitt betrachtet bevorzugt halbkreisförmig ausgebildet. Eine derartige Form verhindert ein Abrutschen des Austreibestempels vom Schaufelhals, wenn in diesen eine Nut mit entsprechend halbkreisförmigem Querschnitt zur Aufnahme des freien Endes des Austreibestempels eingebracht wird.

Die Schlageinheit ist vorteilhaft über eine Verschwenkeinrichtung schwenkbar an dem Rahmen gehalten. Mit einer solchen Verstelleinheit lässt sich die Schlageinheit in Bezug auf die auszutreibenden Schaufeln optimal ausrichten.

Die Klemmeinheit weist bevorzugt eine Verstelleinrichtung auf, die derart ausgebildet ist, dass sie zumindest eine Bewegung der Klemmeinheit radial zum Drehtisch ermöglicht. Entsprechend kann die Klemmeinheit für Radscheiben mit verschiedenen Durchmessern verwendet werden.

Die Klemmeinheit ist bevorzugt schwenkbar an dem Rahmen gehalten. Entsprechend kann die Klemmeinheit zentrisch zur Mittelachse der Verdichterradscheibe ausgerichtet werden.

Gemäß einer Ausgestaltung der vorliegenden Erfindung weist die Klemmeinheit einen unteren und einen oberen Haltestempel auf, die aufeinander zu und voneinander weg bewegbar sind, insbesondere über einen Spindeltrieb oder einen Hydraulikzylinder. Entsprechend lässt sich die Verdichterradscheibe zwischen den Haltestempeln aufnehmen.

Gemäß einer weiteren Ausgestaltung der vorliegenden Erfindung umfasst die Austreibevorrichtung eine Prägeeinheit, die insbesondere integral mit der Klemmeinheit zu einer Klemm-Prägeeinheit ausgebildet ist. Die Prägeeinheit dient dazu, die die ausgetriebenen Schaufeln ersetzenden neuen Schaufeln mittels Prägen an der Radscheibe festzulegen. Die Ausstattung der Austreibevorrichtung mit einer solchen Prägeeinheit ist insbesondere dahingehend von Vorteil, dass eine gesonderte Prägemaschine nicht erforderlich ist. Bevorzugt sind in den Haltestempeln Prägestempel integriert, was zu einem sehr einfachen und kostengünstigen Aufbau führt. Alternativ können Haltestempel und Prägestempel als austauschbare Komponenten vorgesehen sein, die dann in Abhängigkeit von der durchzuführenden Tätigkeit wahlweise an der Klemm-Prägeeinheit lösbar montiert werden.

Die Fräseinheit ist bevorzugt über einen mehrgliedrigen Gelenkarm zwischen einer Betriebsstellung und einer Nicht-Betriebsstellung verschwenkbar an dem Basisgestell gehalten. Entsprechend kann die Fräseinheit je nach Bedarf ein- und ausgeschwenkt werden.

Die Fräseinheit ist vorteilhaft derart ausgebildet, dass sie in ihrer Betriebsstellung an einer Mittelachse des Drehtisches abstützbar ist. Dank dieser zusätzlichen Abstützung wird eine sehr gute Steifigkeit der Fräseinheit während des Fräsprozesses erzielt.

Die Fräseinheit weist bevorzugt eine Arretiereinrichtung zum Arretieren der Drehgelenke des Gelenkarms auf. Über eine solche Arretiereinrichtung wird die Fräseinheit während der Fräsbearbeitung zusätzlich versteift.

Vorteilhaft weist die Fräseinheit zumindest zwei Fräserverfahrachsen zum Verfahren eines Fräskopfes auf.

Bevorzugt ist eine horizontale Fräserverfahrachse vorgesehen, die derart an einem der Gelenkarmglieder positioniert ist, dass die Richtung einer zu fräsenden Nut stets durch die Mittelachse des Drehtisches geht.

Bevorzugt ist eine vertikale Fräserverfahrachse vorgesehen, über die die Zustellbewegung realisiert wird.

Der Antrieb der Fräserverfahrachsen kann manuell oder über entsprechende Motoren erfolgen.

Der Rahmen umfasst bevorzugt ein erstes Rahmenteil, das auf dem Basisgestell über eine Linearführung bewegbar gehalten ist, ein zweites Rahmenteil, das auf dem ersten Rahmenteil lösbar und verschwenkbar befestigt ist, ein drittes Rahmenteil, das an dem zweiten Rahmenteil schwenkbar gehalten ist, und ein viertes Rahmenteil, das lösbar an dem zweiten Rahmenteil gehalten ist, wobei das Basisgestell vorzugsweise in einzelne lösbar miteinander verbundene Basisgestellteile unterteilt ist. Eine solche Unterteilung des Basisgestells und/oder des Rahmens in einzelne lösbar miteinander verbundene Gestell- bzw. Rahmenteile ist insbesondere dahingehend von Vorteil, dass die Austreibevorrichtung für den Transport entsprechend zerlegbar ist. Mit anderen Worten ist die Austreibevorrichtung in einzelne Transportmodule unterteilt, die sich einfach und platzsparend transportieren lassen.

Gemäß einer Ausgestaltung der vorliegenden Erfindung ist die Klemmeinheit an dem dritten Rahmenteil angeordnet, und die Schlageinheit ist an dem vierten Rahmenteil angeordnet.

Darüber hinaus schafft die vorliegende Erfindung ein Verfahren zum Austreiben von formschlüssig an einer Radscheibe gehaltenen Schaufeln, insbesondere Verdichterschaufeln, bei dem die Schaufeln unter Verwendung einer erfindungsgemäßen Austreibevorrichtung ausgetrieben werden.

Bevorzugt wird/werden der Vorspanndruck des Vorspannzylinders und/oder die Schlagenergie des Schlagwerks und/oder die Schlagfrequenz des Schlagwerks während des Austreibens einer Schaufel verändert, was manuell, halbautomatisch oder vollautomatisch erfolgen kann. Mit anderen Worten werden die genannten Parameter an die jeweiligen Anforderungen des Austreibeprozesses angepasst.

Gemäß einer Ausgestaltung des erfindungsgemäßen Verfahrens werden geprägte Bereiche eines Schaufelfußes einer auszutreibenden Schaufel vor dem Austreiben der Schaufel zumindest teilweise mittels Fräsen entfernt, um den Austreibevorgang zu vereinfachen.

Vorteilhaft wird an der Oberseite eines Schaufelfußes einer auszutreibenden Schaufel vor dem Austreiben eine Vertiefung eingefräst, die während des Austreibens der Schaufel als Auflage für den Austreibestempel dient und einem Abrutschen des Austreibestempels entgegenwirkt.

Weitere Vorteile und Merkmale der vorliegenden Erfindung werden anhand der nachfolgenden Beschreibung einer Austreibevorrichtung gemäß einer Ausführungsform der vorliegenden Erfindung unter Bezugnahme auf die beiliegende Zeichnung deutlich. Darin ist
- Figur 1: eine perspektivische Ansicht einer Austreibevorrichtung gemäß einer Ausführungsform der vorliegenden Erfindung;
- Figur 2: eine weitere perspektivische Ansicht der in Figur 1 dargestellten Austreibevorrichtung;
- Figur 3: eine Draufsicht der in Figur 1 dargestellten Austreibevorrichtung;
- Figur 4: eine perspektivische Ansicht einer Austreibevorrichtung gemäß einer zweiten Ausführungsform der vorliegenden Erfindung mit einem an dieser gehaltenen Verdichterrad; und
- Figur 5: eine perspektivische Teilansicht der in Figur 4 dargestellten Austreibevorrichtung ohne an dieser gehaltenem Verdichterrad, wobei eine Fräseinheit der Austreibevorrichtung in eine Nicht-Betriebsstellung verschwenkt ist.

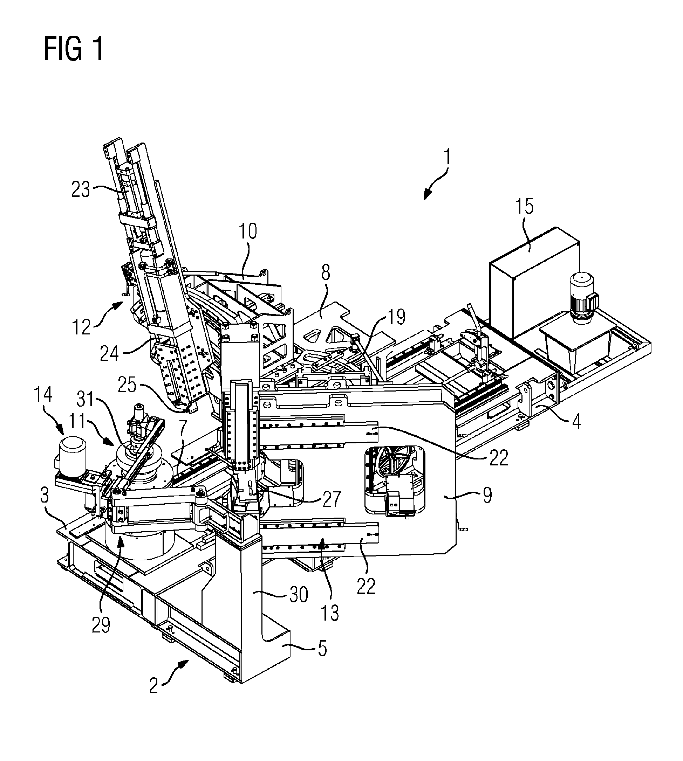

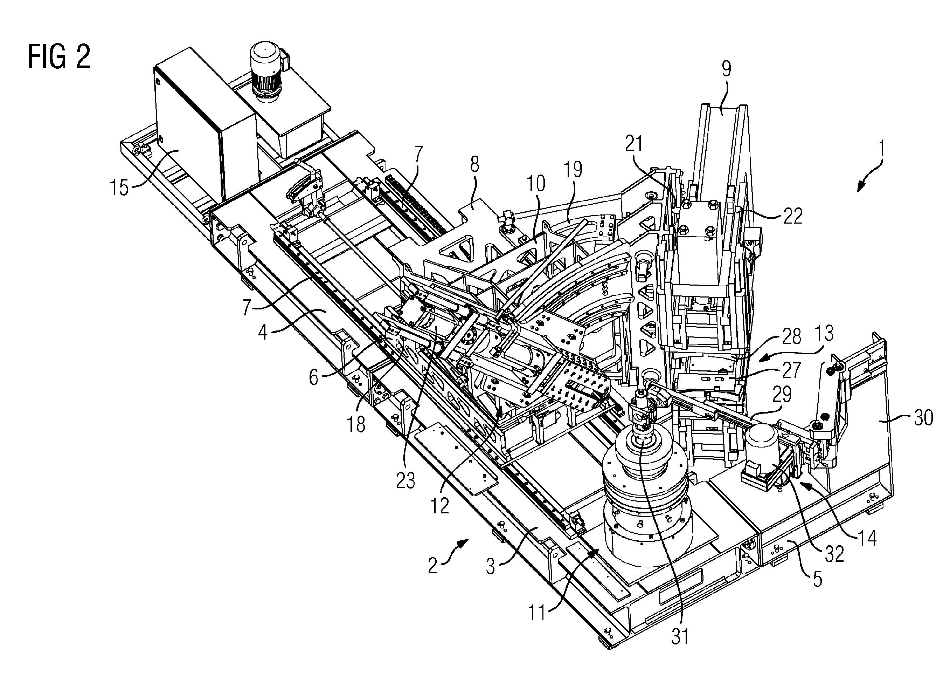

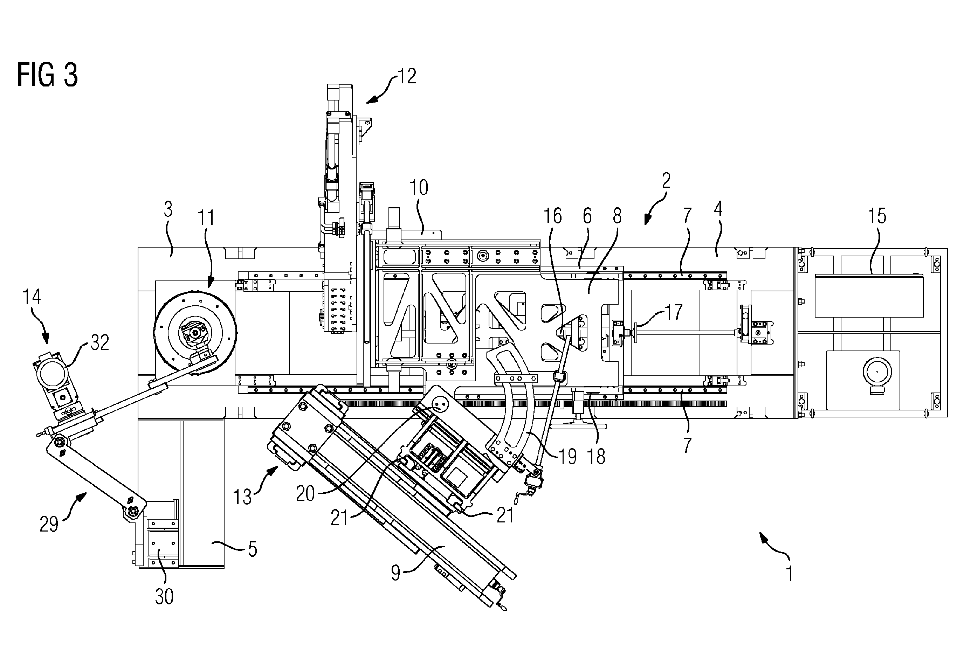

Die Figuren 1 bis 3 zeigen eine Austreibevorrichtung 1 gemäß einer Ausführungsform der vorliegenden Erfindung, die zum Austreiben von formschlüssig in einer Radscheibe gehaltenen Schaufeln dient, insbesondere zum Austreiben von Verdichterschaufeln.

Die Austreibevorrichtung 1 umfasst ein Basisgestell 2, das in ein vorderes Basisgestellteil 3, ein lösbar mit diesem verbundenes hinteres Basisgestellteil 4 und ein Basisgestellzusatzteil 5 unterteilt ist, das lösbar seitlich am vorderen Basisgestellteil 3 montiert ist. Ein erstes Rahmenteil 6 ist über eine Linearführung 7, die sich über das vordere Basisgestellteil 3 und das hintere Basisgestellteil 4 erstreckt, vor und zurück bewegbar auf dem Basisgestell 2 gehalten. Ein zweites Rahmenteil 8 ist auf dem ersten Rahmenteil 5 verschwenkbar angeordnet und lösbar an diesem befestigt. Ein drittes Rahmenteil 9 ist seitlich an dem zweiten Rahmenteil 7 verschwenkbar gehalten und lösbar mit diesem verbunden. Ein viertes Rahmenteil 10 ist auf das zweite Rahmenteil 7 aufgesetzt und lösbar an diesem montiert.

Die Hauptkomponenten der Austreibevorrichtung 1 bilden ein Hub-Drehtisch 11, der auf dem vorderen Basisgestellteil 3 befestigt ist, eine Schlageinheit 12, die verschwenkbar an dem vierten Rahmenteil 10 montiert ist, eine Klemm-Prägeeinheit 13, die bewegbar an dem dritten Rahmenteil 9 befestigt ist, eine Fräseinheit 14, die auf dem Basisgestellzusatzteil 5 montiert ist, und ein Schaltschrank 15, der am hinteren Basisgestellteil 4 angeordnet ist.

Um die Austreibevorrichtung 1 problemlos transportieren zu können, ist diese in mehrere Module unterteilt, die lösbar miteinander verbunden werden können.

Ein erstes Modul umfasst das vordere Basisgestellteil 3, das erste Rahmenteil 6, das zweite Rahmenteil 8, einen vorderen Teil der Linearführung 7 und den Hub-Drehtisch 11.

Ein zweites Modul umfasst das hintere Basisgestellteil 4 mit dem auf diesem montierten zweiten Teil der Linearführung 7 und dem Schaltschrank 15.

Ein drittes Modul umfasst das zweite Rahmenteil 8, das auf diesem montierten vierte Rahmenteil 10 sowie die daran gehaltene Schlageinheit 12.

Ein viertes Modul umfasst das dritte Rahmenteil 9 und die darin gehaltene Klemm-Prägeeinheit 13.

Ein fünftes Modul umfasst das Basisgestellanbauteil 5 und die darauf montierte Fräseinheit 14.

Das Verfahren des als Schlitten ausgebildeten ersten Rahmenteils 6 entlang der Linearführung 7 erfolgt manuell. Das erste Rahmenteil 6 kann dabei über eine nicht näher dargestellte Verriegelungsplatte in drei Positionen entlang der Linearführung 7 verriegelt werden. Auf diese Weise wird der komplette Verstellbereich des ersten Rahmenteils 6 entlang der Linearführung 7 in drei Teil-Verstellbereiche aufgeteilt. Die Endpositionierung des ersten Rahmenteils 6 in den jeweiligen Teil-Verstellbereichen erfolgt dann im Rahmen einer Feinjustierung über eine Trapezgewindespindel 16, die über ein an der Rückseite des ersten Rahmenteils 6 angeordnetes Handrad 17 manuell betätigt werden kann. Als Orientierung dient dabei ein nicht näher dargestellter Stellungsanzeiger. Dank dieses Stellanzeigers ist es möglich, eine einmal ermittelte Position des ersten Rahmenteils 6 entlang der Linearführung 7 einfach wiederzufinden.

Alternativ kann die Verstellung des ersten Rahmenteils 6 entlang der Linearführung 7 auch durch eine elektromechanische Verstellung mittels eines Servomotors oder Drehstrommotors oder auch durch einen Hydraulikzylinder erfolgen. Die entsprechenden Verstellachsen können mit Wegmesssystemen ausgerüstet werden. Die jeweiligen Wegstrecken können dann per Digitalanzeige direkt auf dem Bedienfeld angezeigt werden.

Die Fixierung des ersten Rahmenteils 6 in der Arbeitsposition kann an sämtlichen Achsen durch an den jeweiligen Kolbenstangen angebrachte Kolbenstangenklemmeinrichtungen realisiert werden.

Das zweite Rahmenteil 8 ist verschwenkbar um eine Verschwenkachse 18 an dem ersten Rahmenteil 6 gehalten. Die Verschwenkbewegung um die Verschwenkachse 18 wird über einen nicht näher dargestellten Hydraulikzylinder realisiert und dient als Eigengewichtsausgleich für alle an dem zweiten Rahmenteil 8 gehaltenen Komponenten. Seitlich an dem zweiten Rahmenteil 8 ist eine Verschwenkeinrichtung 19 gehalten, die zur Aufnahme der Klemm-Prägeeinheit 13 dient und eine Verschwenkung um eine vertikale Verschwenkachse 20 ermöglicht. Die Verschwenkung erfolgt vorliegend manuell. Es sollte jedoch klar sein, dass die manuelle Verstellung auch hier durch eine elektromechanische oder hydraulische Verstellung ersetzt werden kann. An der Verschwenkeinrichtung 19 sind sich vertikal erstreckende Führungsschienen 21 vorgesehen, an denen das dritte Rahmenteil 9 und somit die Klemm-Prägeeinheit 13 auf- und abwärts bewegbar gehalten ist. Ferner sind an dem dritten Rahmenteil 9 sich horizontal erstreckende Führungsschienen 22 angeordnet, die eine Verstellbewegung der Klemm-Prägeeinheit 13 radial zum Hub-Drehtisch 11 ermöglichen.

Der Hub-Drehtisch 11 dient zur Aufnahme von Verdichterradscheiben. Er besteht aus einem Hubteil und einem Drehteil, die vorliegend jedoch nicht näher dargestellt sind. Das Hubteil besitzt eine robuste Vertikalführung mit Hydraulikzylinder. Durch die Verstellung des Hydraulikzylinders können die Dickenunterschiede der Verdichterradscheiben ausgeglichen werden. Damit die Hydraulikzylinder bei längerer Belastung durch entsprechende Leckagen in Dichtungen seine Halteposition nicht verändert, ist der Hub-Drehtisch 11 mit einem kräftigen Anschlagring ausgerüstet, der das langsame Absinken der Verdichterradscheibe verhindert. Für die exakte Feinpositionierung der Winkelposition der Verdichterradscheibe zur Schlageinheit 12 ist die Aufnahme des Hub-Drehtisches 11 mit einem Drehteil ausgerüstet. Über dieses Drehteil kann die Verdichterradscheibe in Bezug auf die Schlageinheit 12 positioniert werden. Alternativ kann die Positionierung der Verdichterradscheibe auch durch einen in den Hub-Drehtisch 11 integrierten Servoantrieb erfolgen.

Die Schlageinheit 12 umfasst von oben nach unten betrachtet ein Schlagwerk 23, das durch einen Pneumatikschlagzylinder gebildet wird, einen durch einen Hydraulikzylinder gebildeten Vorspannzylinder 24 und einen Austreibestempel 25. Der Vorspannzylinder 24 umfasst eine durchgehende Kolbenstange, auf deren oberes freies Ende das Schlagwerk 23 wirkt, wobei am unteren freien Ende der Austreibestempel 25 gehalten ist. Der Vorspannzylinder 24 dient dazu, den Austreibestempel 25 während des Austreibeprozesses mit einem vorbestimmten Vorspanndruck gegen die auszutreibende Schaufel vorzuspannen, der vorliegend über eine nicht näher dargestellte Bedieneinrichtung von dem Werker zwischen 0 und 250 bar eingestellt werden kann. Ebenso können die Schlagenergie sowie die Schlagfrequenz des Schlagwerks 23 über diese Bedieneinrichtung manuell variiert werden.

Alternativ ist es auch möglich, eine Maschinensteuerung und zumindest einen den Vorsprungdruck des Vorspannzylinders 24 erfassenden Sensor vorzusehen, der den während des Austreibeprozesses erfassten Vorspanndruck in Form von Vorspanndruckausgangssignalen an die Maschinensteuerung sendet, wobei die Maschinensteuerung derart eingerichtet ist, dass sie den Vorspanndruck des Vorspannzylinders 24 und/oder die Schlagkraft und/oder die Schlagenergie des Schlagwerks 23 in Abhängigkeit von den empfangenen Vorspanndruckausgangssignalen ändert. Auf diese Weise kann eine halbautomatische oder vollautomatisierte Regelung der von dem Austreibestempel 25 während des Austreibeprozesses auf die auszutreibende Schaufel wirkenden Kräfte erfolgen.

Der Austreibestempel 25 ist über einen nicht näher dargestellten Aufnahmekopf pendelnd an dem unteren freien Ende der Kolbenstange des Vorspannzylinders 24 gelagert, um eine Beschädigung des Austreibestempels 25 aufgrund von seitlich auf diesen einwirkenden Kräften zu verhindern. Das freie Ende des Austreibestempels 25 ist vorliegend im Querschnitt betrachtet halbkreisförmig ausgebildet, wodurch die Gefahr eines Abrutschens des Austreibestempels 25 von der auszutreibenden Schaufel verringert wird. Die Schlageinheit 12 ist über eine Verschwenkeinrichtung 26 verschwenkbar an dem vierten Rahmenteil 10 gehalten.

Die Klemm-Prägeeinheit 13 umfasst einen ortsfesten unteren Haltestempel 27 und eine auf- und abwärts bewegbaren oberen Haltestempel 28. Die Bewegung des oberen Haltestempels 28 wird vorliegend durch einen Hydraulikzylinder realisiert, wobei ebenso der Einsatz eines Spindeltriebs möglich ist. Die Haltestempel 27 und 28 sind nicht näher dargestellte Prägestempel integriert. Entsprechend kann die Klemm-Prägeeinheit 13 sowohl zum Unterstützen einer am Hub-Drehtisch 11 angeordneten Verdichterradscheibe als auch zum Prägen von neu in der Verdichterradscheibe zu befestigenden Schaufeln eingesetzt werden. Alternativ können separate Prägestempel vorgesehen sein, die zur Durchführung einer Prägebearbeitung anstelle der Haltestempel an der Klemm-Prägeeinheit 13 im Rahmen einer Umrüstung montiert werden.

Die Fräseinheit 14 umfasst einen mehrgliedrigen Gelenkarm 29, wobei ein freies Ende des Gelenkarms 29 in einer Fräseinheit-Halteeinrichtung 30, die auf dem Basisgestellanbauteil 5 montiert ist, und das andere freie Ende des Gelenkarms 29 an einem Abstützelement 31 festgelegt ist, das am Hub-Drehtisch 11 montiert ist. Ein Fräskopf 32 ist über zwei Verfahrachsen horizontal und vertikal verfahrbar, wobei die horizontale Verfahrachse derart an einem der Gelenkarmglieder positioniert ist, dass die Richtung einer zu fräsenden Nut stets durch die Mittelachse des Hub-Drehtisches 11 geht. Über die vertikale Verfahrachse erfolgt dann die Zustellung. Der Antrieb der Verfahrachsen erfolgt vorliegend manuell. Alternativ können natürlich auch entsprechende Motoren vorgesehen sein.

In demjenigen Zustand, in dem der Gelenkarm 29 an dem Abstützelement 31 montiert ist, können die einzelnen Drehgelenke des Gelenkarms 29 über nicht näher dargestellte Arretiereinrichtungen arretiert werden, um eine gute Steifigkeit während der Fräsbearbeitung zu gewährleisten. Wird die Fräseinheit 14 nicht benötigt, so kann der Gelenkarm 29 von dem Abstützelement 31 gelöst werden, woraufhin die Fräseinheit 14 in eine nicht näher dargestellte Nicht-Betriebsstellung verschwenkt werden kann.

Zur Durchführung einer Revision von Verdichterschaufeln wird zunächst die in ihre einzelnen Module zerlegte Austreibevorrichtung 1 zum Revisionsort transportiert. Die modulare Bauweise erleichtert dabei den Transport zu Luft, Wasser und Land. Am Revisionsort werden dann die Module der Austreibevorrichtung 1 derart zusammengesetzt, dass sich die in den Figuren dargestellte Anordnung ergibt.

Zur Durchführung eines Austreibeprozesses wird an dem Hub-Drehtisch 11 eine vorliegend nicht dargestellte Verdichterradscheibe mit den daran angeordneten auszutreibenden Schaufeln befestigt, wobei jede Schaufel über einen schwalbenschwanzartig geformten Schaufelfuß in entsprechend geformten, entlang des Umfangs der Verdichterradscheibe ausgebildeten Verdichterradscheibennut formschlüssig gehalten ist. Dabei ist jede Schaufel gegen ein axiales Verschieben innerhalb der zugeordneten Verdichterradscheibennuten durch ein beidseitiges Verprägen randseitiger Schaufelfußabschnitte an der Verdichterradscheibe gesichert.

Nach der Befestigung der Verdichterradscheibe am Hub-Drehtisch 11 wird das freie Ende des Gelenkarms 29 der Fräseinheit 14 an dem Abstützelement 31 befestigt, woraufhin die Gelenke des Gelenkarms 29 arretiert werden.

In einem weiteren Schritt werden die oberen geprägten Schaufelfußabschnitte jeder in der Verdichterradscheibe gehaltenen Schaufel unter Einsatz der Fräseinheit 14 entfernt. Darüber hinaus wird in jedem Schaufelfuß eine Nut mit halbkreisförmigem Querschnitt entsprechend der Spitze des Austreibestempels 25 gefräst, um diese darin aufzunehmen.

Nach Abschluss der Fräsarbeiten wird der Gelenkarm 29 von dem Abstützelement 31 gelöst und die Fräseinheit 14 in ihre Nicht-Betriebsstellung verschwenkt. Daraufhin werden der Hub-Drehtisch 11 und die Schlageinheit 12 derart zueinander ausgerichtet, dass die Spitze des Austreibestempels 25 in der gefrästen Nut einer der auszutreibenden Schaufeln aufgenommen wird, wobei darauf zu achten ist, dass die Achse des Austreibestempels 25 mit der zugehörigen Verdichterradscheibennut, in der die auszutreibende Verdichterschaufel aufgenommen ist, fluchtet. Nunmehr wird der Vorspanndruck des Vorspannzylinders 24 der Schlageinheit 12 derart eingestellt, dass der Austreibestempel 25 auf die auszutreibende Schaufel etwa 70% bis 90% der zum Austreiben erforderlichen Austreibekraft ausübt. Daraufhin wird die Schlagenergie des Schlagwerks 23 derart gewählt, dass die restliche zum Austreiben der Schaufel erforderliche Kraft über das Schlagwerk 23 aufgebracht wird. Ferner wird die Schlagfrequenz des Schlagwerks 23 festgelegt. Nunmehr kann die Schaufel aus der Verdichterradscheibe ausgetrieben werden, wobei die Vorspannkraft des Vorspannzylinders 24, die Schlagenergie des Schlagwerks 23 ebenso wie dessen Schlagfrequenz von dem Werker in Abhängigkeit des Austreibezustands einer Schaufel verändert werden kann. Nach Austreiben einer Verdichterschaufel wird der Hub-Drehtisch 11 derart gedreht, dass der Austreibestempel 25 zur nächsten Verdichterschaufel ausgerichtet wird, woraufhin der nächste Austreibeprozess durchgeführt werden kann. Während des Austreibens der einzelnen Schaufeln wird die Verdichterradscheibe jeweils zwischen den Haltestempeln 26 und 27 der Klemm-Prägeeinheit 13 geklemmt und auf diese Weise gestützt, so dass die über die Schlageinheit 12 auf die Verdichterradscheibe wirkenden Kräfte aufgenommen werden. Auf diese Weise wird eine Lageveränderung der auszutreibenden Schaufel in Bezug auf den Austreibestempel 25 sicher verhindert. Die schwenkbare Lagerung des Austreibestempels 25 in den zugehörigen Aufnahmekopf verringert die Gefahr einer Beschädigung des Austreibestempels 25 während des jeweiligen Austreibeprozesses.

Nach dem Austreiben sämtlicher Schaufeln aus der Verdichterradscheibe können neue Schaufeln in die entsprechenden Verdichterradscheibennuten eingesetzt werden, wobei aus den Verdichterradscheibennuten vorstehende Abschnitte der jeweiligen Schaufelfüße unter Einsatz der Klemm-Prägeeinheit 13 verprägt werden, um die jeweiligen Verdichterschaufeln axial in den zugehörigen Verdichterradscheibennuten zu sichern. Zur Überwachung der Positionierung der Verdichterradscheibe zu den Prägestempeln ist eine nicht näher dargestellte Videokamera für jeden Halte- bzw. Prägestempel 26 und 27 vorgesehen. Die Videokamerabilder können über einen entsprechenden Monitor betrachtet werden. Nach Abschluss dieser Arbeiten kann die Verdichterradscheibe vom Hub-Drehtisch 11 gelöst und wieder in das entsprechende Arbeitsgerät eingebaut werden.

Nach Abschluss der Revision wird die Austreibevorrichtung 1 wieder in ihre einzelnen Module zerlegt und kann problemlos abtransportiert werden.

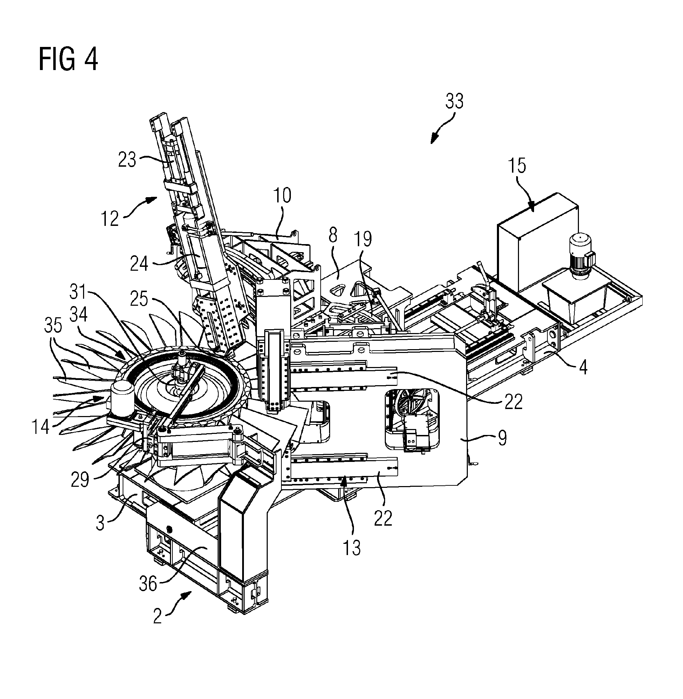

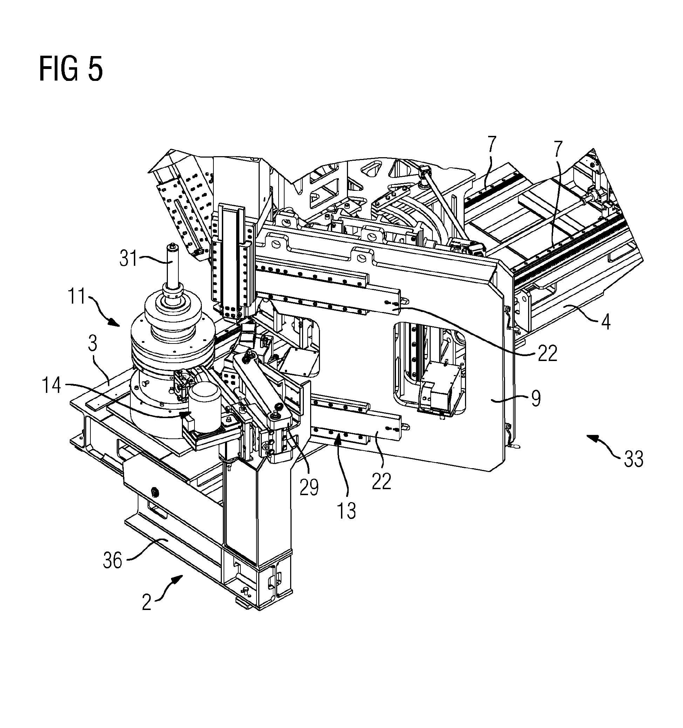

Die Figuren 4 und 5 zeigen eine Austreibevorrichtung 33 gemäß einer zweiten Ausführungsform der vorliegenden Erfindung, deren Aufbau in wesentlichen Teilen dem Aufbau der in den Figuren 1 bis 3 dargestellten Austreibevorrichtung 1 entspricht. Einander entsprechende Bauteile sind daher der Einfachheit halber mit identischen Bezugsziffern versehen und werden nicht erneut beschrieben. An dem Hub-Drehtisch ist ein Verdichterrad 34 mit den daran angeordneten auszutreibenden Verdichterschaufeln 35 gehalten.

Der einzige Unterschied zwischen den Austreibevorrichtungen 1 und 33 besteht darin, dass anstelle des Basisgestellanbauteils 5 ein Basisgestellanbauteil 36 vorgesehen ist, auf dem die Fräseinheit 14 montiert ist, das entgegen der ersten Ausführungsform nicht seitlich an dem vorderen Basisgestellteils 3 sondern an dessen Stirnseite befestigt ist.

Figur 5 zeigt die Fräseinheit 14 in ihrer Nicht-Betriebsstellung, in der der Gelenkarm 29 von dem am Hub-Drehtisch 11 gehaltenen Abstützelement 31 gelöst und platzsparend eingeschwenkt ist.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen, der durch die beiliegenden Ansprüche definiert ist.

## Patentansprüche

1. Austreibevorrichtung (1) zum Austreiben von formschlüssig an einer Radscheibe gehaltenen Schaufeln,
insbesondere Verdichterschaufeln,
umfassend ein Basisgestell (2), einen an dem Basisgestell (2) befestigten Rahmen (6, 8, 9, 10), einen an dem Basisgestell (2) angeordneten Drehtisch (11),
insbesondere Hub-Drehtisch,
eine an dem Rahmen befestigte Schlageinheit (12) mit einem Austreibestempel (25) und einem auf diesen wirkenden Schlagwerk (23),
eine schwenkbar an dem Rahmen (6, 8, 9, 10) vorgesehene Klemmeinheit (13), die zur Abstützung der Radscheibe während des Austreibens einer Schaufel ausgebildet ist, und eine separat und beabstandet von dem Rahmen (6, 8, 9, 10) angeordnete Fräseinheit (14).

2. Austreibevorrichtung (1) nach Anspruch 1,
**dadurch gekennzeichnet, dass**
die Schlageinheit (12) einen auf den Austreibestempel (25) wirkenden Vorspannzylinder (24) aufweist, mit dem der Austreibestempel (25) mit einem vorbestimmten Druck gegen eine auszutreibende Schaufel vorspannbar ist.

3. Austreibevorrichtung (1) nach Anspruch 1 oder 2,
**dadurch gekennzeichnet, dass**
zumindest eine Bedieneinrichtung vorgesehen ist, über die der Vorspanndruck des Vorspannzylinders (24) und/oder die Schlagenergie des Schlagwerks (23) und/oder die Schlagfrequenz des Schlagwerks (23) von einem Bediener einstellbar sind,
wobei der Vorspanndruck insbesondere in einem Bereich zwischen 0 und 250 bar einstellbar ist.

4. Austreibevorrichtung (1) nach einem der vorhergehenden Ansprüche,
**dadurch gekennzeichnet,**
**dass** eine Maschinensteuerung und zumindest ein den Vorspanndruck des Vorspannzylinders (24) erfassender Sensor vorgesehen sind, der den erfassten Vorspanndruck in Form von Vorspanndruckausgangssignalen an die Maschinensteuerung sendet,
wobei die Maschinensteuerung derart eingerichtet ist, dass sie den Vorspanndruck des Vorspannzylinders (24) und/oder die Schlagkraft des Schlagwerks (23) und/oder die Schlagenergie des Schlagwerks (23) in Abhängigkeit von den empfangenen Vorspanndruckausgangssignalen ändert.

5. Austreibevorrichtung (1) nach einem der vorhergehenden Ansprüche,
**dadurch gekennzeichnet,**
**dass** der Vorspannzylinder (24) ein Hydraulikzylinder ist.

6. Austreibevorrichtung (1) nach einem der vorhergehenden Ansprüche,
**dadurch gekennzeichnet,**
**dass** der Vorspannzylinder (24) eine durchgehende Kolbenstange aufweist und derart zwischen dem Schlagwerk (23) und dem Austreibestempel (25) angeordnet ist, dass das Schlagwerk (23) auf das eine Kolbenstangenende wirkt, und dass das andere Kolbenstangenende auf den Austreibestempel (25) wirkt.

7. Austreibevorrichtung (1) nach einem der vorhergehenden Ansprüche,
**dadurch gekennzeichnet,**
**dass** das Schlagwerk (23) einen pneumatischen Schlagzylinder aufweist.

8. Austreibevorrichtung (1) nach einem der vorhergehenden Ansprüche,
**dadurch gekennzeichnet,**
**dass** der Austreibestempel (25) in einem Aufnahmekopf pendelnd gelagert ist.

9. Austreibevorrichtung (1) nach einem der vorhergehenden Ansprüche,
**dadurch gekennzeichnet,**
**dass** das freie Ende des Austreibestempels (25) im Querschnitt betrachtet halbkreisförmig ausgebildet ist.

10. Austreibevorrichtung (1) nach einem der vorhergehenden Ansprüche,
**dadurch gekennzeichnet,**
**dass** die Schlageinheit (12) über eine Verschwenkeinrichtung (26) schwenkbar an einem Rahmenteil (9) gehalten ist.

11. Austreibevorrichtung (1) nach einem der vorhergehenden Ansprüche,
**dadurch gekennzeichnet,**
**dass** die Klemmeinheit (13) eine Verstelleinrichtung aufweist, die derart ausgebildet ist, dass sie zumindest eine Bewegung der Klemmeinheit (13) radial zum Drehtisch (11) ermöglicht.

12. Austreibevorrichtung (1) nach einem der vorhergehenden Ansprüche,
**dadurch gekennzeichnet,**
**dass** die Klemmeinheit (13) einen unteren Haltestempel (27) und einen oberen Haltestempel (28) aufweist, die aufeinander zu und voneinander weg bewegbar sind,
insbesondere über einen Spindeltrieb oder einen Hydraulikzylinder.

13. Austreibevorrichtung (1) nach einem der vorhergehenden Ansprüche,
**dadurch gekennzeichnet,**
**dass** eine Prägeeinheit vorgesehen ist, die insbesondere integral mit der Klemmeinheit zu einer Klemm-Prägeeinheit (13) ausgebildet ist.

14. Austreibevorrichtung (1) nach Anspruch 13,
**dadurch gekennzeichnet,**
**dass** in den Haltestempeln (27, 28) Prägestempel integriert sind,
oder dass Haltestempel und Prägestempel als austauschbare Komponenten vorgesehen sind.

15. Austreibevorrichtung (1) nach einem der vorhergehenden Ansprüche,
**dadurch gekennzeichnet,**
**dass** die Fräseinheit (14) über einen mehrgliedrigen Gelenkarm (29) zwischen einer Betriebsstellung und einer Nicht-Betriebsstellung verschwenkbar an dem Basisgestell (2) gehalten ist.

16. Austreibevorrichtung (1) nach Anspruch 15,
**dadurch gekennzeichnet,**
**dass** die Fräseinheit (14) eine Arretiereinrichtung zum Arretieren der Drehgelenke des Gelenkarms (29) aufweist.

17. Austreibevorrichtung (1) nach einem der vorhergehenden Ansprüche,
**dadurch gekennzeichnet,**
**dass** die Fräseinheit (14) derart ausgebildet ist, dass sie in ihrer Betriebsstellung an einer Mittelachse des Drehtisches (11) abstützbar ist.

18. Austreibevorrichtung (1) nach einem der vorhergehenden Ansprüche,
**dadurch gekennzeichnet,**
**dass** die Fräseinheit (14) zumindest zwei Fräserverfahrachsen zum Verfahren eines Fräskopfes (32) aufweist.

19. Austreibevorrichtung (1) nach Anspruch 18,
**dadurch gekennzeichnet,**
**dass** eine horizontale Fräserverfahrachse vorgesehen ist, die derart an einem der Gelenkarmglieder eines Gelenkarms (29) positioniert ist, dass die Richtung einer zu fräsenden Nut stets durch die Mittelachse des Drehtisches (11) geht.

20. Austreibevorrichtung (1) nach Anspruch 18 oder 19,
**dadurch gekennzeichnet,**
**dass** eine vertikale Fräserverfahrachse vorgesehen ist.

21. Austreibevorrichtung (1) nach einem der Ansprüche 18 bis 20,
**dadurch gekennzeichnet,**
**dass** der Antrieb der Fräserverfahrachsen manuell und/oder über entsprechende Motoren erfolgt.

22. Austreibevorrichtung (1) nach einem der vorhergehenden Ansprüche,
**dadurch gekennzeichnet,**
**dass** der Rahmen ein erstes Rahmenteil (6), das auf dem Basisgestell (2) über eine Linearführung (7) bewegbar gehalten ist,
ein zweites Rahmenteil (8), das auf dem ersten Rahmenteil (6) lösbar und verschwenkbar befestigt ist,
ein drittes Rahmenteil (9), das an dem zweiten Rahmenteil (8) schwenkbar gehalten ist, und
ein viertes Rahmenteil (10) umfasst, das lösbar an dem zweiten Rahmenteil (8) gehalten ist, wobei das Basisgestell (2) vorzugsweise in einzelne lösbar miteinander verbundene Basisgestellteile (3, 4, 5) unterteilt ist.

23. Austreibevorrichtung (1) nach Anspruch 23,
**dadurch gekennzeichnet,**
**dass** die Klemmeinheit (13) an dem dritten Rahmenteil (9) angeordnet ist, und
**dass** die Schlageinheit (12) an dem vierten Rahmenteil (10) angeordnet ist.

24. Verfahren zum Austreiben von formschlüssig an einer Radscheibe gehaltenen Schaufeln,
insbesondere Verdichterschaufeln,
bei dem die Schaufeln unter Verwendung einer Austreibevorrichtung (1) nach einem der vorhergehenden Ansprüche ausgetrieben werden.

25. Verfahren nach Anspruch 24,
bei dem der Vorspanndruck des Vorspannzylinders (24) und/oder die Schlagenergie des Schlagwerks (23) und/oder die Schlagfrequenz des Schlagwerks (23) während des Austreibens einer Schaufel verändert wird/werden.

26. Verfahren nach Anspruch 24 oder 25,
bei dem geprägte Bereiche eines Schaufelfußes einer auszutreibenden Schaufel vor dem Austreiben der Schaufel zumindest teilweise mittels Fräsen entfernt werden.

27. Verfahren nach einem der Ansprüche 24 bis 26,
bei dem an der Oberseite eines Schaufelfußes einer auszutreibenden Schaufel vor dem Austreiben eine Vertiefung eingefräst wird, die während des Austreibens der Schaufel als Auflage für den Austreibestempel dient und einem Abrutschen des Austreibestempels (25) entgegenwirkt.
